# EUROPEAN PATENT APPLICATION

(11) **EP 4 190 663 A1**
(43) Date of publication of application: **07.06.2023**
(21) Application number: 21849227.0
(22) Date of filing: 29.07.2021
(51) Int. Cl.: B61D 27/00, F24F 11/00

(54) **AIR CONDITIONER AND DEHUMIDIFICATION METHOD**

(30) Priority: 29.07.2020 CN 202010745945
(71) Applicant: Shandong Longertek Technology Co., Ltd., Jinan, Shandong 271100 (CN)
(72) Inventor: GAO, Fuxue, Jinan, Shandong 271100 (CN); JIN, Tiantian, Jinan, Shandong 271100 (CN); JING, Guangcai, Jinan, Shandong 271100 (CN); SHE, Kai, Jinan, Shandong 271100 (CN); ZHU, Honglei, Jinan, Shandong 271100 (CN)
(74) Representative: HGF
(86) International application number: PCT/CN2021/109278
(87) International publication number: WO 2022/022642

(57) **Abstract**

Disclosed are an air conditioner and a dehumidification method for an air conditioner. The air conditioner includes a compressor (1), a four-way valve (12), an evaporator (3), an expansion valve (4), solenoid valves, a condenser (10) and a controller controlling operation of the air conditioner, which are connected into a loop by means of pipelines, and the solenoid valves include a main solenoid valve (9) and one or more supercooling solenoid valves (6) arranged in parallel, of which opening states can be controlled separately, an outlet of the supercooling solenoid valve (6) is connected to an inlet of a supercooling heat regenerator (5), and an outlet of the supercooling heat regenerator (5) is connected to an inlet of the expansion valve (4), and the controller controls, according to comparison results between indoor temperature and indoor humidity data received in real time and preset values, operating states of each of the one or more supercooling solenoid valves (6) and the main solenoid valve (9), to achieve operations of separate refrigeration and refrigeration plus supercooling dehumidification, and adjusts amount of dehumidification by controlling opening number of the one or more supercooling solenoid valves (6). The air conditioner adjusts a dehumidification effect and the amount of dehumidification by controlling the flow of a refrigerant flowing through the supercooling heat regenerator, thereby achieving effects of refrigeration and supercooling dehumidification.

## Description

### Cross-Reference to Related Application

The present disclosure claims priority to a patent application No. 202010745945.1, filed on July 29, 2020 and entitled "air conditioner and dehumidification method" as a priority document, which is incorporated herein by reference in its entirety.

### Technical Field

The present disclosure belongs to the technical field of refrigeration, and in particular to an air conditioner and a dehumidification method for the air conditioner.

### Background

Presently, railway vehicles such as subways and light rails have large carrying capacity. During morning and evening peak hours, passenger density in a carriage can reach 6 persons/m² to 9 persons/m². In order to ensure oxygen supply to passengers in the vehicle, generally, 1/3 of ventilation in the railway vehicle is fresh air, and moreover, half or more of human heat dissipation is latent heat loads, such that when an air conditioning unit of the railway vehicle is in a refrigeration season, latent heat loads for dehumidification account for half or more of total heat loads of refrigeration of the air conditioner. However, in fact, the current railway vehicle generally has no independent dehumidification function, only has an auxiliary dehumidification function during refrigeration, and has no ideal dehumidification effect, and especially when outside air has high humidity, the relative humidity in the vehicle can reach around 70%, and even 80% or above during a plum rain season of the Southern. Large relative humidity will produce a feeling of stifling for passengers, and further causes reproduction of bacteria and viruses in the vehicle, and therefore it is extremely urgent to reduce the relative humidity in the vehicle during the refrigeration season.

Similarly, ordinary household air conditioners or commercial air conditioners used by places such as office buildings have also the same problem. An existing product and a dehumidification method cannot satisfy the demand of effective dehumidification.

### Summary

The main objective of the present disclosure is to solve the above problem and defects. Firstly, the present disclosure provides an air conditioner that may perform effective dehumidification according to relative humidity and environment temperature, and further provides a dehumidification method, which adjusts a supercooling dehumidification effect and the amount of dehumidification by controlling the flow of a refrigerant flowing through a supercooling heat regenerator, thereby achieving dual effects of refrigeration and dehumidification.

In order to achieve the above objective, the present disclosure firstly provides an air conditioner. The technical solution of the air conditioner is as follows:
the air conditioner includes a compressor, a four-way valve, an evaporator, an expansion valve, solenoid valves, a condenser and a controller controlling operation of the air conditioner, which are connected into a loop by means of pipelines, and the solenoid valves include a main solenoid valve and one or more supercooling solenoid valves arranged in parallel, of which opening states can be controlled separately, an outlet of each of the one and more supercooling solenoid valves is connected to an inlet of a supercooling heat regenerator, an outlet of the supercooling heat regenerator is connected to an inlet of the expansion valve, and the controller controls, according to comparison results between indoor temperature and indoor humidity data received in real time and preset values, operating states of each of the one or more supercooling solenoid valves and the main solenoid valve, to achieve operations of separate refrigeration and refrigeration plus supercooling dehumidification, and adjusts amount of dehumidification by controlling opening number of the one or more supercooling solenoid valves.

In some embodiments, the supercooling solenoid valve is connected to the condenser by means of a supercooling connecting pipe, the main solenoid valve is connected to the condenser by means of a main connecting pipe, and a pipe diameter of the supercooling connecting pipe is less than a pipe diameter of the main connecting pipe.

In some embodiments, a calibre of each of the one or more supercooling solenoid valves is less than a calibre of the main solenoid valve.

The present disclosure further provides a dehumidification method, of which technical solution is as follows:
the dehumidification method uses the air conditioner as described above, in a refrigeration mode, a refrigerant passes, under action of a compressor, through a four-way valve into a condenser for heat exchange, a controller selects, according to comparison results between indoor temperature and indoor humidity data received in real time and preset values, a corresponding control program, to control operating states of a main solenoid valve and one or more supercooling solenoid valves, and opening number of the one or more supercooling solenoid valves, the refrigerant passes through the main solenoid valve or the supercooling solenoid valve, and the supercooling heat regenerator connected to the supercooling solenoid valve, then passes through an expansion valve and an evaporator to achieve refrigeration, and finally flows back to the compressor, to complete a refrigeration process or a refrigeration plus supercooling dehumidification process, and the controller controls the opening number of the one or more supercooling solenoid valves, to control amount of supercooling dehumidification.

In some embodiments, in a case that an indoor real-time temperature is in a range of t1≤Tim≤t2, and an indoor relative humidity RH is less than a*Tim+b, the opening number of the one or more supercooling solenoid valves is 1, and Tim is the indoor real-time temperature, t1 and t2 are temperature limit values preset by the controller, RH is the indoor relative humidity, and a and b are equation coefficients, empirical values and constants.

In some embodiments, in a case that the indoor real-time temperature is in the range of t1≤Tim≤t2, and the indoor relative humidity RH is less than c*Tim+d, the opening number of the one or more supercooling solenoid valves is 1, and Tim is the indoor real-time temperature, t1 and t2 are the temperature limit values preset by the controller, RH is the indoor relative humidity, c and d are equation coefficients, empirical values and constants, and c*Tim+d≤a*Tim+b.

In some embodiments, in a case that the indoor real-time temperature is in the range of t1≤Tim≤t2, and the indoor relative humidity is in a range of c*Tim+d≤RH≤a*Tim+b, the main solenoid valve is closed, and the opening number of the one or more supercooling solenoid valves is computed by means of an equation n=N*0.1*(RH-(c*Tim+d)-Toe/Tim-2)), and Tim is the indoor real-time temperature, t1 and t2 are the temperature limit values preset by the controller, RH is the indoor relative humidity, a, b, c and d are the equation coefficients, the empirical values, and the constants, n is the computed opening number of the one or more supercooling solenoid valves, and is an integer, computed data is rounded up to the integer, N is a total number of the supercooling solenoid valves, and Toe is a real-time condensation temperature.

In some embodiments, in a case that an indoor real-time temperature is in a range of t1≤Tim≤t2, and an indoor relative humidity RH is greater than or equal to a*Tim+b, the supercooling solenoid valves are all opened, and the main solenoid valve is closed.

In some embodiments, in a case that an indoor real-time temperature is not in a range of t1≤Tim≤t2, each of the one or more supercooling solenoid valves is closed, and the main solenoid valve is opened, and Tim is the indoor real-time temperature, and t1 and t2 are temperature limit values preset by the controller.

In some embodiments, real-time signals of an indoor temperature and an indoor relative humidity are regularly received by the controller and are compared with preset values, and in a case that a next temperature signal value is received, and in a case of satisfying |Timᵢ-Tim₍ᵢ₊₁₎|>1°C, Tim and a relative humidity real-time value are compared with the preset values for determination anew, so as to determine opening states and the opening number of the one or more supercooling solenoid valves, and in a case of satisfying |Timᵢ-Tim₍ᵢ₊₁₎|1≤1°C, last opening states are maintained, and Timᵢ is indoor temperature data at an i-th moment, and Tim ₍ᵢ₊₁₎ is indoor temperature data at an (i+1)-th moment.

The present disclosure further provides an air conditioner. The technical solution of the air conditioner is as follows:
the conditioner includes a controller controlling operation of the air conditioner, and a compressor, a four-way valve, an evaporator, an expansion valve, solenoid valves and a condenser that are connected into a loop by means of pipelines, and the solenoid valves include a supercooling heat regenerator and a plurality of supercooling solenoid valves, an outlet of each of the plurality of the supercooling solenoid valves is connected to an inlet of the supercooling heat regenerator, an outlet of the supercooling heat regenerator is connected to an inlet of the expansion valve, and the controller controls, according to comparison results between indoor temperature and indoor humidity data received in real time and preset values, an operating state of each of the plurality of the supercooling solenoid valves, to adjust the amount of dehumidification.

In some embodiments, the solenoid valves further include a main solenoid valve, an outlet of the main solenoid valve is in communication with the inlet of the expansion valve, and the controller controls operating states of the supercooling solenoid valves, the supercooling heat regenerator and the main solenoid valve, to achieve operations of separate refrigeration and refrigeration plus supercooling dehumidification.

In some embodiments, each of the plurality of the supercooling solenoid valves is connected to the condenser by means of a supercooling connecting pipe, the main solenoid valve is connected to the condenser by means of a main connecting pipe, and a pipe diameter of the supercooling connecting pipe is less than a pipe diameter of the main connecting pipe.

In some embodiments, a calibre of each of the plurality of the supercooling solenoid valves is less than a calibre of the main solenoid valve.

The present disclosure further provides a dehumidification method, of which technical solution is as follows:
a dehumidification method uses the air conditioner as described above, in a refrigeration mode, a refrigerant passes, under action of a compressor, through a four-way valve into a condenser for heat exchange, a controller selects, according to comparison results between indoor temperature and indoor humidity data received in real time and preset values, a corresponding control program, to control operating states of a supercooling heat regenerator and a plurality of supercooling solenoid valves, the refrigerant passes through the supercooling solenoid valve and the supercooling heat regenerator connected to the supercooling solenoid valve, then passes through an expansion valve and an evaporator to achieve refrigeration, and finally flows back to the compressor, and the controller controls the opening number of the plurality of the supercooling solenoid valves, to control amount of supercooling dehumidification.

In some embodiments, the solenoid valves further include a main solenoid valve, and the controller selects, according to the comparison results between the indoor temperature and the indoor humidity data received in real time and the preset values, a corresponding control program, to control an operating state of the main solenoid valve.

In some embodiments, in a case of satisfying t1≤Tim≤t2 and RH<a*Tim+b, the opening number of the plurality of the supercooling solenoid valves is 1, and Tim is an indoor temperature, t1 and t2 are temperature limit values preset by the controller, RH is indoor relative humidity, and a and b are equation coefficients, empirical values and constants.

In some embodiments, in a case of satisfying t1≤Tim≤t2 and RH<c*Tim+d, the opening number of the plurality of the supercooling solenoid valves is 1, and c and d are equation coefficients, empirical values and constants, and c*Tim+d≤a*Tim+b.

In some embodiments, in a case of satisfying t1≤Tim≤t2 and c*Tim+d≤RH≤a*Tim+b, the main solenoid valve is closed, and the opening number of the plurality of the supercooling solenoids is computed by means of an equation [n]=N*0.1*(RH-(c*Tim+d)-Toe/Tim-2)), and [n] is the computed opening number of the supercooling solenoid valves, [n] is an integer, [] represents rounding up of computed data to the integer, N is a total number of the plurality of the supercooling solenoid valves, and Toe is a real-time condensation temperature.

In some embodiments, the solenoid valves further include a main solenoid valve, and in a case of satisfying t1≤Tim≤t2 and RH≥a*Tim+b, the plurality of the supercooling solenoid valves are all opened, and the main solenoid valve is closed.

In some embodiments, in a case that Tim does not satisfy t1≤Tim≤t2, each of the plurality of the supercooling solenoid valves is closed, and a main solenoid valve is opened, and Tim is a real-time temperature of an environment, and t1 and t2 are temperature limit values preset by the controller.

In some embodiments, indoor temperature and indoor humidity data are regularly received by the controller, in a case of satisfying |Timᵢ-Tim ₍ᵢ₊₁₎ |>1°C, the indoor temperature and the indoor humidity data obtained in real time are compared with the preset values for determination anew, so as to determine opening states and the opening number of the plurality of the supercooling solenoid valves, and in a case of satisfying |Timᵢ-Tim ₍ᵢ₊₁₎ |≤1°C, current opening states are maintained, and Timᵢ is indoor temperature data at an i-th moment, and Tim ₍ᵢ₊₁₎ is indoor temperature data at an (i+1)-th moment.

To sum up, the present disclosure provides the air conditioner and the dehumidification method. The evaporator is equivalently divided into two parts by arranging the supercooling heat regenerator. In the refrigeration mode, the supercooling heat regenerator is utilized to heat up air having large humidity after flowing through the evaporator, to condense water vapor in the air, thereby reducing relative humidity of supply air; moreover, the supercooling heat regenerator as part of the evaporator may further supercool the condensed refrigerant, so as to increase output of refrigerating capacity of the evaporator, the supercooling heat regenerator may not produce an influence on output of final refrigerating capacity of an air conditioning unit according to a principle of conservation of energy, and may increase the amount of dehumidification of the air conditioning unit, to reduce the indoor relative humidity, and a dehumidification effect and a supercooling degree are simultaneously adjusted by controlling the flow of the refrigerant flowing through the supercooling heat regenerator; and in a heating mode, influences on heating capacity of the air conditioning unit are avoided by arranging the main solenoid valve that may be shorted to the supercooling heat regenerator.

### Brief Description of the Drawings

Fig. 1 is a schematic structural diagram of refrigeration of an air conditioner of the present disclosure; and
Fig. 2 is a schematic diagram of a dehumidification control flow of a dehumidification method of the present disclosure.

In the figures, compressor 1, ventilator 2, evaporator 3, expansion valve 4, supercooling heat regenerator 5, supercooling solenoid valve 6, main solenoid valve 9, condenser 10, condensate fan 11, four-way valve 12, supercooling connecting pipe 13, and main connecting pipe 16.

### Detailed Description of the Embodiments

The present disclosure is further described in detail below in combination with the accompanying drawings and particular embodiments.

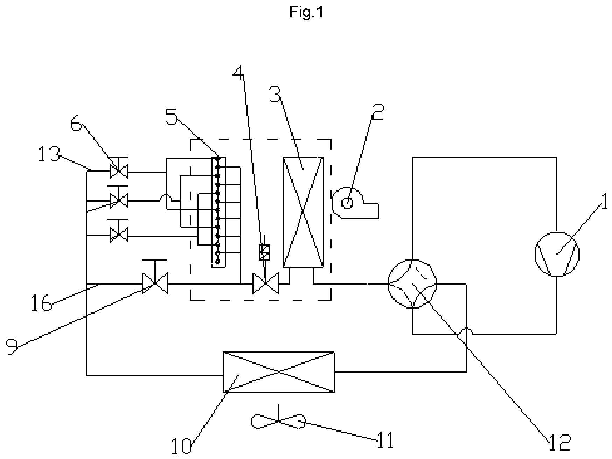

The present disclosure firstly provides an air conditioner. As shown in Fig. 1, the air conditioner includes a compressor 1, a four-way valve 12, an evaporator 3, an expansion valve 4, solenoid valves, a condenser 10 and a controller controlling operation of the air conditioner, which are connected into a loop by means of pipelines, where the solenoid valves include a main solenoid valve 9 and one or more supercooling solenoid valves 6 arranged in parallel, of which opening states are controlled separately, an outlet of each of the one and more supercooling solenoid valves 6 is connected to an inlet of a supercooling heat regenerator 5, and an outlet of the supercooling heat regenerator 5 is connected to an inlet of the expansion valve 4, and the controller controls, according to comparison results between indoor temperature and indoor humidity data received in real time and preset values, operating states of each of the one and more supercooling solenoid valves 6 and the main solenoid valve 9, to achieve operations of separate refrigeration and refrigeration plus supercooling dehumidification, and adjusts amount of dehumidification by controlling opening number of the one or more supercooling solenoid valves 6.

It should be noted that the supercooling solenoid valve above refers to a solenoid valve for a supercooling section. The supercooling heat regenerator is referred to as a supercooler. A refrigerant in the supercooler is a high-temperature and high-pressure liquid from the condenser to the evaporator, low-temperature air passing through the evaporator exchanges heat with the refrigerant in the pipeline, and a temperature of the refrigerant after heat exchange is reduced, and is lower than a saturation temperature under refrigerant pressure, which is referred to as supercooling.

With a flow direction of the refrigerant of a refrigeration mode as an example, connection of refrigeration components of the air conditioner provided in the present disclosure is introduced. As shown in Fig. 1, an outlet of the compressor 1 is connected to the four-way valve 12 and the condenser 10 in a sequence of the pipeline, the refrigerant is subjected to heat exchange in the condenser 10, and a condensate fan 11 is arranged at the condenser 10, to dissipate generated heat. In this embodiment, in order to perform effective dehumidification, achieve refrigeration, and simultaneously complete necessary dehumidification operations, the solenoid valves include a main solenoid valve 9 and supercooling solenoid valves 6, and the main solenoid valve 9 and the supercooling solenoid valves 6 are arranged in parallel, a plurality of supercooling solenoid valves 6 may also be arranged, and are also arranged in parallel, opening states of each of the supercooling solenoid valves 6 and the main solenoid valve 9 may each be controlled by the controller of the air conditioner, an outlet or an outlet pipeline of the condenser 10 is in communication with an inlet of the main solenoid valve 9 by means of a main pipeline, and moreover, the outlet or the outlet pipeline of the condenser 10 is in communication with the supercooling solenoid valves 6 by means of supercooling connecting pipes 13, outlets of the supercooling solenoid valves 6 are connected to a supercooling heat regenerator 5, and an outlet of the main solenoid valve 9 and an outlet of the supercooling heat regenerator 5 are in communication with an inlet of the expansion valve 4 after merging through a pipeline, or the outlet of the main solenoid valve 9 and the outlet of the supercooling heat regenerator 5 are in communication with an inlet of the expansion valve 4 respectively. Under specific conditions (refrigeration plus supercooling dehumidification mode), the main solenoid valve 9 is closed, the refrigerant comes out of the condenser 10, and passes through the supercooling connecting pipes 13, the supercooling solenoid valves 6 into the supercooling heat regenerator 5 for heat exchange, the refrigerant after heat exchange through the condenser 10 may be further supercooled to increase output of refrigerating capacity of the evaporator 3, and during supercooling, air around the refrigerant may be heated up and water vapor in the air condenses to achieve an effect of supercooling dehumidification. The supercooled refrigerant coming out of the supercooling heat regenerator 5 passes through the expansion valve 4 into the evaporator 3, and is further liquefied to absorb heat and reduce a temperature of surrounding air, to achieve a refrigeration effect. A ventilator 2 is arranged at the evaporator 3, to discharge cooled air. The supercooling heat regenerator 5 and the evaporator 3 may be of an integrated structure, such that an overall size of an air conditioning unit is reduced, and the supercooling heat regenerator 5 is arranged between the ventilator 2 and the evaporator 3, such that air near the integrated evaporator 3 is heated up and dehumidified by means of the supercooling heat regenerator 5, and is liquefied and cooled by means of the evaporator 3, to circulate under the action of the ventilator 2, to achieve air circulation indoors, inside the unit and indoors and outdoors. The supercooling heat regenerator 5 is utilized to achieve supercooling dehumidification without influencing a subsequent refrigeration effect, thereby enhancing a dehumidification effect. During refrigeration achieved by the evaporator 3, some dehumidification effect may be achieved. The supercooling heat regenerator 5 has no influence on output of final refrigerating capacity of the air conditioner according to a principle of conservation of energy, but as a separate additionally arranged component having a dehumidification function, the supercooling heat regenerator may further improve dehumidification efficiency of the air conditioner, so as to reduce indoor relative humidity.

The vaporized refrigerant flows back to the compressor 1, to complete a closed loop flow of the refrigerant, so as to complete a refrigeration and dehumidification operation. The refrigerant flowing back constantly runs under the driving of the compressor 1, to achieve continuous refrigeration and dehumidification operation.

In a heating mode, the main solenoid valve 9 is opened, all the supercooling solenoid valves 6 are closed, and the refrigerant reversely flows in the loop in which the above components are connected, but does not flow through the supercooling heat regenerator 5, starts from the compressor 1, and flows back into the compressor 1.

The controller of the air conditioner receives a power-on signal, selects, according to an environment temperature or user settings, the corresponding refrigeration or heating mode, compares received data values of an indoor temperature and relative humidity with preset values, to determine the opening states of the main solenoid valve 9 and the supercooling solenoid valves 6, so as to determine a flow direction and path of the refrigerant, and selects the corresponding control program to adjust the amount of dehumidification.

In some embodiments, one or more supercooling solenoid valves 6 may be arranged. In this embodiment, as shown in Fig. 1, the three supercooling solenoid valves 6 are arranged in total, the supercooling solenoid valves 6 are arranged in parallel, are connected to one another by means of the supercooling connecting pipes 13, and are connected to the condenser 10. A pipe diameter of the supercooling connecting pipe 13 is less than a pipe diameter of the main connecting pipe 16 connected to the main solenoid valve 9, and a calibre of the supercooling solenoid valve 6 is less than a calibre of the main solenoid valve 9, so as to better divert the refrigerant without generating energy loss. The solenoid valves may also be replaced with ball valves, capillaries, one-way valves, etc., which have similar functions of circulation and cut-off of the refrigerant.

The present disclosure further provides a dehumidification method for the air conditioner as described above. The air conditioner does not need dehumidification in a heating mode, the main solenoid valve 9 is opened, the three supercooling solenoid valves 6 are closed, and a refrigerant passes through a compressor 1, an evaporator 3 and an expansion valve 4, and then passes through the main solenoid valve 9 into a condenser 10, which is the same as an existing heating mode, and is not be repeated. In this embodiment, the dehumidification method provided herein is introduced mainly in a refrigeration mode. In this embodiment, dehumidification includes ordinary refrigeration dehumidification and refrigeration dehumidification plus supercooling dehumidification.

A controller of the air conditioner receives a power-on signal, according to user requirements or program control, the controller which is electrically connected to components controls the compressor 1 to start working, the controller detects power-on requirements of a user, when a refrigeration mode requirement is detected, in the refrigeration mode, a refrigerant passes, under the action of the compressor 1, through a four-way valve 12 into the condenser 10 for heat exchange, after heat exchange of the condenser 10, the controller controls the main solenoid valve 9 to be closed and the supercooling solenoid valves 6 to be opened, the refrigerant passes through each of the supercooling solenoid valves 6 connected in parallel and the supercooling heat regenerator 5 connected to supercooling solenoid valves, after achieving supercooling dehumidification, the refrigerant passes through the expansion valve 4 and the evaporator 3 to cool surrounding air, and flows back to the compressor 1, to complete a refrigeration cycle of the refrigerant, so as to achieve operations of refrigeration and dehumidification.

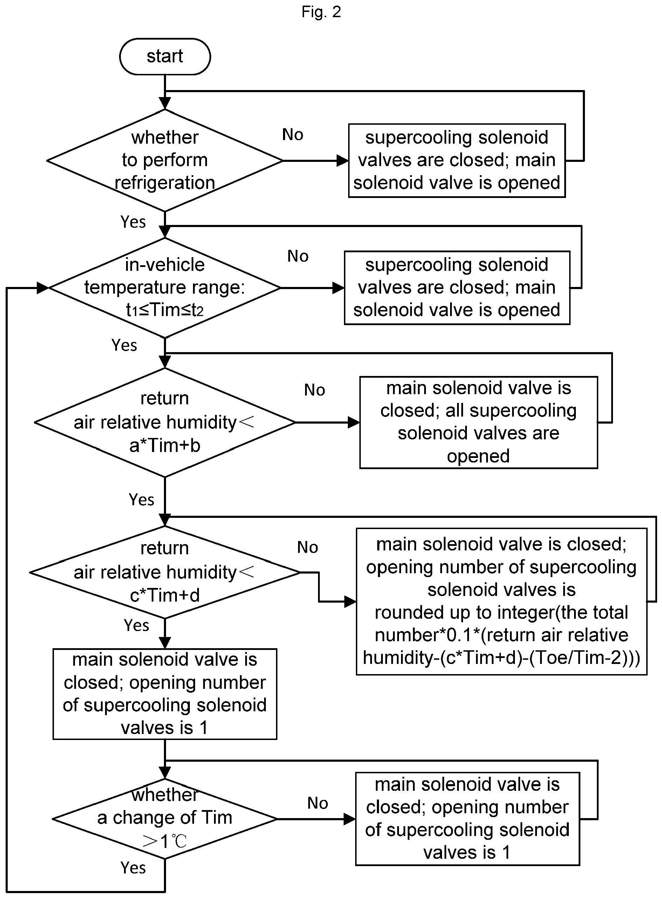

The supercooling dehumidification control is simple. On this basis, the present disclosure further provides a dehumidification method, which may effectively control, according to real-time data of an environment temperature and relative humidity in combination with a built-in dehumidification adjustment control program, indoor humidity. In this dehumidification method, an air conditioning unit further includes one or more of temperature sensors and humidity sensors that detect an indoor environment temperature Tim and a real-time relative humidity value PH in real-time. In this embodiment, the relative humidity value PH is return air relative humidity at a return air inlet, to obtain accurate indoor actual humidity values for accurate control, and when the plurality of the temperature sensors/humidity sensors are arranged, data collected by each sensor is computed by weighted average or computed in other ways to determine data for controlling dehumidification adjustment, which is not a focus of the present disclosure, and may use common computations, equations, or other technical solutions that may appear in the future without requirements and limitations. Each sensor transmits temperature/humidity values detected in real time to the controller in real time or regularly. As shown in Fig. 2, the controller compares real-time data with preset values pre-stored in the built-in program, and then controls the operating states of the solenoid valves according to the built-in control program, and the built-in program performs, according to the following principle, determination in the refrigeration mode:
firstly, the environment temperature Tim is detected in real time, when the environment temperature is not in a range of t1≤Tim≤t2, that is, when Tim<t1, the controller defaults to the too low environment temperature, and heating is required, and when Tim>t2, the controller defaults to the too high environment temperature, and refrigeration is required, so as to reduce the environment temperature. Therefore, a dehumidification effect is synchronously achieved in an ordinary refrigeration mode without additional supercooling dehumidification operation, and the controller controls each of the supercooling solenoid valves 6 to be closed and the main solenoid valve 9 to be opened for ordinary refrigeration operation;
when detecting that the environment temperature is in the range of t1≤Tim≤t2, the controller may directly control the main solenoid valve 9 to be closed and each of the supercooling solenoid valves 6 to be opened, and may also further detect a relative humidity value, in particular return air relative humidity RH at a return air inlet, and when the relative humidity RH is greater than or equal to a*Tim+b, the controller defaults to too large environment humidity, full effort dehumidification is required, and the supercooling solenoid valves 6 are all opened, and match refrigeration to add supercooling dehumidification that is a full effect supercooling dehumidification operation; and
when the controller detects that the environment temperature is in the range of t1≤Tim≤t2, and when relative humidity RH is less than a*Tim+b, the controller controls the opening number of the supercooling solenoid valves to be 1 and the main solenoid valve 9 to be closed, the refrigerant passes through the condenser 10, one of the supercooling solenoid valve 6, and the supercooling heat regenerator 5, and then passes through the evaporator 3 and the expansion valve 4 to return to the compressor 1, to achieve refrigeration, and simultaneously separately perform a supercooling dehumidification operation. Since only one of the supercooling solenoid valve 6 is opened, supercooling dehumidification capacity is low, and dehumidification efficiency is not high, which is suitable for the condition of low air humidity; and in order to further accurately control the dehumidification capacity, when the controller detects that the relative humidity RH is less than c*Tim+d, the main solenoid valve 9 may be closed, and the opening number of the supercooling solenoid valves 6 to be 1, where a, b, c and d are computation coefficients, which may be empirical values and constants, b>d, and t1 and t2 are built-in temperature limit values. According to experience summarized in a number of experiments, each coefficient/limit value may be valued by using values shown in Table 1:

**Table 1**

| t1 | t2 | a | b | c | d |
|---|---|---|---|---|---|
| 15-18°C | 31-35°C | -4 to -3.6 | 150-165 | -4 to -3.6 | 150-165 |

Data in Table 1 are only reference values. In practical application, different data may be taken according to different use environments and different cooling capacity of the air conditioner. Table 2 shows a value of each coefficient/limit value in this embodiment:

**Table 2**

| t1 | t2 | a | b | c | d |
|---|---|---|---|---|---|
| 17°C | 33°C | -3.33 | 160 | -3.33 | 150 |

As shown in Table 2, a=c, and b>d. In practical application, according to requirements, appropriate values of a, b, c and d may be selected according to the above principle, but it is necessary to make a*Tim+b>c*Tim+d. When the controller detects that the environment temperature is in the range of t1≤Tim≤t2, and the relative humidity RH is in a range of c*Tim+d≤RH≤a*Tim+b, the main solenoid valve 9 is closed, and the opening number of the supercooling solenoid valves 6 is computed by means of an equation n=N*0.1*(RH-(c*Tim+d) -(Toe/Tim-2)), so as to adjust the amount of supercooling dehumidification online and in real time, where n is the computed opening number of the supercooling solenoid valves 6, and n is an integer, when a computed value is a decimal, the computed value is rounded up to the integer, N is the total number of the supercooling solenoid valves, and Toe is a real-time condensation temperature. By means of computation, the opening number of the supercooling solenoid valves is determined, and the flow of the refrigerant in a supercooling section is changed to adjust the amount of dehumidification, thereby being energy-saving and environmentally-friendly.

It should be noted that the control flow described above and shown in Fig. 2 is only a combined control of an environment temperature Tim and measured values of return air relative humidity RH values at a return air inlet. Real-time data of Tim and RH may be detected at the same time, and are compared with preset data, and an appropriate dehumidification manner, and the opening states and the opening number of the supercooling solenoid valves 6 are comprehensively selected in a preset flow, but may not be considered as a limitation on the sequence before and after the control flow, and the temperature/humidity determination manner and sequence may be determined according to requirements.

The temperature/humidity sensor may detect a value of the environment temperature Tim and a value of the relative temperature RH at a return air inlet in real time, and transmit data to the controller in real time, and the controller adjusts refrigeration and dehumidification states in real time to achieve stepless adjustment of a dehumidification function; and in order to save energy and reduce consumption, the controller may regularly receive data of the environment temperature Tim and the relative humidity RH, and compare the data with the preset values, when the controller receives a next (i+1) environment temperature Tim signal value, a change of Tim is firstly determined, when ITimi- Tim ₍ᵢ₊₁₎ |>1°C, real-time values of the environment temperature Tim and the relative humidity RH are compared with the preset values for determination according to the method described above, so as to re-determine and adjust the opening states and the opening number of the supercooling solenoid valves 6, and when ITimi- Tim₍ᵢ₊₁₎|≤1°C, last opening states are maintained, where i is the number of times to collect data, and is an integer. According to a specified principle, detection and determination are performed circularly, and supercooling dehumidification is adjusted in real time.

The present disclosure further provides an air conditioner. As shown in Fig. 1, the air conditioner includes a controller controlling operation of the air conditioner, and a compressor 1, a four-way valve 12, an evaporator 3, an expansion valve 4, solenoid valves and a condenser 10 that are connected into a loop by means of pipelines, and the solenoid valves include a supercooling heat regenerator 5 and a plurality of supercooling solenoid valves 6, an outlet of each of the supercooling solenoid valves 6 is connected to an inlet of the supercooling heat regenerator 5, and an outlet of the supercooling heat regenerator 5 is connected to an inlet of the expansion valve 4, and the controller controls, according to comparison results between indoor temperature and indoor humidity data received in real time and preset values, an operating state of each of the supercooling solenoid valves 6, to adjust the amount of dehumidification.

In a refrigeration mode of the air conditioner of the present disclosure, the supercooling heat regenerator is utilized to heat up air having large humidity after passing through the evaporator, to condense water vapor in the air, thereby reducing relative humidity of supply air; and the opening number of the supercooling heat regenerators is controlled, such that the amount of dehumidification may be controlled, and under the condition of large indoor relative humidity, the plurality of the supercooling heat regenerators are opened, such that the indoor relative humidity may be effectively reduced, and desirable sense of experience of personnel is ensured.

With a flow direction of the refrigerant of a refrigeration mode as an example, connection of refrigeration components of the air conditioner provided in the present disclosure is introduced. As shown in Fig. 1, an outlet of the compressor 1 is connected to the four-way valve 12 and the condenser 10 in a sequence of the pipeline, the refrigerant is subjected to heat exchange in the condenser 10, and a condensate fan 11 is arranged at the condenser 10, to dissipate generated heat. In this embodiment, in order to perform effective dehumidification, achieve refrigeration, and simultaneously complete necessary dehumidification operations, the solenoid valves include a supercooling heat regenerator 5 and a plurality of supercooling solenoid valves 6, and the plurality of the supercooling solenoid valves 6 are arranged in parallel, an opening state of each of the supercooling solenoid valves 6 may be separately controlled by the controller of the air conditioner, an outlet or an outlet pipeline of the condenser 10 is in communication with the supercooling solenoid valves 6 by means of supercooling connecting pipes 13, outlets of the supercooling solenoid valves 6 are connected to the supercooling heat regenerator 5, and outlets of the supercooling heat regenerator 5 are in communication with the expansion valve 4 after merging through a pipeline or the outlets of the supercooling heat regenerator 5 are in communication with an inlet of the expansion valve 4 respectively. Under specific conditions (refrigeration plus supercooling dehumidification mode), the refrigerant comes out of the condenser 10, and passes through the supercooling connecting pipes 13 and the supercooling solenoid valves 6 into the supercooling heat regenerator 5 for heat exchange, the refrigerant after heat exchange through the condenser 10 may be further supercooled to increase output of refrigerating capacity of the evaporator 3, and during supercooling, air around the refrigerant may be heated up and water vapor in the air condenses to achieve an effect of supercooling dehumidification. The supercooled refrigerant coming out of the supercooling heat regenerator 5 passes through the expansion valve 4 into the evaporator 3, and is further liquefied to absorb heat and reduce a temperature of surrounding air, to achieve a refrigeration effect. A ventilator 2 is arranged at the evaporator 3, to discharge cooled air. The supercooling heat regenerator 5 and the evaporator 3 may be of an integrated structure, such that an overall size of an air conditioning unit is reduced, and the supercooling heat regenerator 5 is arranged between the ventilator 2 and the evaporator 3, such that air near the integrated evaporator 3 is heated up and dehumidified by means of the supercooling heat regenerator 5, and is liquefied and cooled by means of the evaporator 3, to circulate under the action of the ventilator 2, to achieve air circulation indoors, inside the unit and indoors and outdoors. The supercooling heat regenerator 5 is utilized to achieve supercooling dehumidification without influencing a subsequent refrigeration effect, thereby enhancing a dehumidification effect. During refrigeration achieved by the evaporator 3, some dehumidification effect may be achieved by the evaporator 3. The supercooling heat regenerator 5 has no influence on output of final refrigerating capacity of the air conditioner according to a principle of conservation of energy, but as a separate additionally arranged component having a dehumidification function, the supercooling heat regenerator may further improve dehumidification efficiency of the air conditioner, so as to reduce indoor relative humidity.

The solenoid valves further include a main solenoid valve, an outlet of the main solenoid valve is in communication with the inlet of the expansion valve, and the controller controls operating states of the supercooling solenoid valves, the supercooling heat regenerator and the main solenoid valve, to achieve operations of separate refrigeration and refrigeration plus supercooling dehumidification. In the present disclosure, influences on heating capacity of the air conditioning unit are avoided by arranging the main solenoid valve that may be shorted to the supercooling heat regenerator.

As shown in Fig. 1, the main solenoid valve 9 and the supercooling solenoid valves 6 are arranged in parallel, the opening state of the main solenoid valve 9 is controlled by the controller of the air conditioner, the outlet or the outlet pipeline of the condenser 10 is in communication with the inlet of the main solenoid valve 9 by means of a main pipeline, and the outlet of the main solenoid valve 9 and the outlet of the supercooling heat regenerator 5 are in communication with the inlet of the expansion valve 4 after merging through a pipeline, or the outlet of the main solenoid valve 9 and the outlet of the supercooling heat regenerator 5 are in communication with the inlet of the expansion valve 4 respectively. In a heating mode, the main solenoid valve 9 is opened, all the supercooling solenoid valves 6 are closed, and the refrigerant reversely flows in the loop in which the above components are connected, but does not flow through the supercooling heat regenerator 5, starts from the compressor 1, and flows back into the compressor 1.

The controller of the air conditioner receives a power-on signal, selects, according to an environment temperature or user settings, the corresponding refrigeration or heating mode, compares received data values of an indoor temperature and relative humidity with preset values, determines the opening states of the main solenoid valve 9 and the supercooling solenoid valves 6, so as to determine a flow direction and path of the refrigerant, and selects the corresponding control program to adjust the amount of dehumidification.

During practical application, those skilled in the art may flexibly configure the number of supercooling solenoid valves 6 according to actual situations. In this embodiment, as shown in Fig. 1, three supercooling solenoid valves 6 are arranged in total, and the supercooling solenoid valves 6 are arranged in parallel, connected to one another by means of the supercooling connecting pipes 13, and are connected to the condenser 10.

Each of the supercooling solenoid valves is connected to the condenser by means of the supercooling connecting pipe, and the main solenoid valve is connected to the condenser by means of a main connecting pipe, and a pipe diameter of the supercooling connecting pipes is less than a pipe diameter of the main connecting pipe. Thus, the refrigerant may be better diverted without energy loss. Specifically, the solenoid valves may also be replaced with ball valves, capillaries, one-way valves, etc., which have similar functions of circulation and cut-off of the refrigerant.

In order to further ensure a desirable diverting effect of the refrigerant, and further ensure little energy loss, according to some embodiments of the disclosure, a caliber of each of the supercooling solenoid valves is less than a calibre of the main solenoid valve.

The present disclosure further provides a dehumidification method for the air conditioner. In a refrigeration mode, a refrigerant passes, under action of a compressor, through a four-way valve into a condenser for heat exchange, a controller selects, according to comparison results between indoor temperature and indoor humidity data received in real time and preset values, a corresponding control program, to control operating states of a supercooling heat regenerator and a plurality of supercooling solenoid valves, the refrigerant passes through the supercooling solenoid valve and the supercooling heat regenerator connected to the supercooling solenoid valve, then passes through an expansion valve and an evaporator to achieve refrigeration, and finally flows back to the compressor, and the controller controls the opening number of the plurality of the supercooling solenoid valves, to control amount of supercooling dehumidification.

In the above dehumidification method, in the refrigeration mode, the controller of the air conditioner utilizes the supercooling heat regenerator to heat up air having large humidity after passing through the evaporator, to condense water vapor in the air, thereby reducing relative humidity of supply air; and the opening number of the supercooling heat regenerators is controlled, such that the amount of dehumidification may be controlled, and under the condition of large indoor relative humidity, the plurality of the supercooling heat regenerators are opened, such that the indoor relative humidity may be effectively reduced, and desirable sense of experience of personnel is ensured.

In some embodiments, the solenoid valves further include a main solenoid valve, and the controller selects, according to the comparison results between the indoor temperature and indoor humidity data received in real time and the preset values, a corresponding control program, to control an operating state of the main solenoid valve.

According to a embodiments of the present application, when t1≤Tim≤t2 and RH<a*Tim+b, the opening number of the plurality of the supercooling solenoid valves is 1, and Tim is an indoor temperature, t1 and t2 are temperature limit values preset by the controller, RH is indoor relative humidity, and a and b are equation coefficients, empirical values and constants. In this case, refrigeration and dehumidification requirements under the condition of low indoor air humidity may be satisfied.

In order to further ensure accurate control of dehumidification capacity, according to another embodiments of the present application, when t1≤Tim≤t2 and RH<c*Tim+d, the opening number of the plurality of the supercooling solenoid valves is 1, c and d are equation coefficients, empirical values and constants, and c*Tim+d≤a*Tim+b.

According to another embodiments of the present application, when t1≤Tim≤t2 and c*Tim+d≤RH≤a*Tim+b, the main solenoid valve is closed, and the opening number of the plurality of the supercooling solenoids is computed by means of an equation
[n]=N*0.1*(RH-(c*Tim+d)-(Toe/Tim-2)), and [n] is the computed opening number of the supercooling solenoid valves, [n] is an integer, [] represents rounding up of computed data to the integer, N is a total number of the plurality of the supercooling solenoid valves, and Toe is a real-time condensation temperature. In the dehumidification method of the present application, the opening number of the supercooling solenoid valves is determined by means of computation, thereby further ensuring flexible control over the amount of dehumidification; and the flow of the refrigerant in a supercooling section is changed to adjust the amount of dehumidification, thereby being more energy-saving and more environmentally-friendly.

In another embodiments of the present application, the solenoid valves further include a main solenoid valve, and when t1≤Tim≤t2 and RH≥a*Tim+b, which indicates that in this case, the indoor relative humidity is large, in this case, in order to further ensure a better sense of experience for indoor personnel, the plurality of the supercooling solenoid valves are all opened, and the main solenoid valve is closed.

In an actual application process, when Tim does not satisfy t1≤Tim≤t2, that is, Tim>t2 orTim<t1, each of the plurality of the supercooling solenoid valves is closed, and a main solenoid valve is opened, and Tim is a real-time temperature of an environment, and t1 and t2 are temperature limit values preset by the controller.

In order to further adjust the amount of dehumidification in real time, and simultaneously ensure low energy consumption of the air conditioner, according to another embodiments of the present application, indoor temperature and indoor humidity data are regularly received by the controller, when |Timᵢ- Tim ₍ᵢ₊₁₎ |>1°C, the indoor temperature and the indoor humidity data obtained in real time are compared with the preset values for determination anew, so as to determine opening states and the opening number of the plurality of the supercooling solenoid valves, and when ITimi- Tim ₍ᵢ₊₁₎ |≤1°C, current opening states are maintained, and Timᵢ is indoor temperature data at an i-th moment, and Tim ₍ᵢ₊₁₎ is indoor temperature data at an (i+1)-th moment. Thus, energy saving and consumption reduction are further achieved.

It should be noted that the control flow described above and shown in Fig. 2 is only a combined control of an environment temperature Tim and measured values of return air relative humidity RH values at a return air inlet. Real-time data of Tim and RH may be detected at the same time, and are compared with preset data, and an appropriate dehumidification manner, and the opening states and the opening number of the supercooling solenoid valves are comprehensively selected in a preset flow, but may not be considered as a limitation on the sequence before and after the control flow, and the temperature/humidity determination manner and sequence may be determined according to requirements.

Those skilled in the art may flexibly set values of a, b, c, d, t1 and t2 above according to actual situations. According to experience summarized in a number of experiments, each coefficient/limit value may be valued by using values shown in Table 1:

**Table 1**

| t1 | t2 | a | b | c | d |
|---|---|---|---|---|---|
| 15-18°C | 31-35°C | -4 to -3.6 | 150-165 | -4 to -3.6 | 150-165 |

Certainly, data in Table 1 above are only reference values. In practical application, different data may be taken according to different use environments and different cooling capacity of the air conditioner. Table 2 shows a value of each coefficient/limit value in a preferred embodiment of this disclosure:

**Table 2**

| t1 | t2 | a | b | c | d |
|---|---|---|---|---|---|
| 17°C | 33°C | -3.33 | 160 | -3.33 | 150 |

The air conditioner and the dehumidification method provided in the present disclosure may be widely used in heat pump air conditioners, refrigeration air conditioners, ordinary household air conditioners, vehicle-mounted air conditioners (automobiles, ordinary railway vehicles, motor cars), commercial/household central air conditioners, etc. There are no requirements and limitations, and the environment temperature is a temperature of an indoor to be refrigerated/dehumidified and in-vehicle.

To sum up, the present disclosure provides the air conditioner and the dehumidification method. The evaporator is equivalently divided into two parts by arranging the supercooling heat regenerator. In the refrigeration mode, the supercooling heat regenerator is utilized to heat up air having large humidity after flowing through the evaporator, to condense water vapor in the air, thereby reducing relative humidity of supply air; moreover, the supercooling heat regenerator as part of the evaporator may further supercool the condensed refrigerant, so as to increase output of refrigerating capacity of the evaporator, the supercooling heat regenerator may not produce an influence on output of final refrigerating capacity of an air conditioning unit according to a principle of conservation of energy, and may increase the amount of dehumidification of the air conditioning unit, to reduce the indoor relative humidity, and a dehumidification effect and a supercooling degree are simultaneously adjusted by controlling the flow of the refrigerant flowing through the supercooling heat regenerator; and in a heating mode, influences on heating capacity of the air conditioning unit are avoided by arranging the main solenoid valve that may be shorted to the supercooling heat regenerator.

As described above, similar technical solutions may be derived by combining contents of provided solutions. Any simple amendments, equivalent changes and modifications made to the above examples according to the technical essence of the present disclosure without departing from the contents of the technical solutions of the present disclosure all fall within the scope of the technical solutions of the present disclosure.

## Claims

1. An air conditioner, comprising a compressor, a four-way valve, an evaporator, an expansion valve, solenoid valves, a condenser and a controller controlling operation of the air conditioner, which are connected into a loop by means of pipelines, wherein the solenoid valves comprise a main solenoid valve and one or more supercooling solenoid valves arranged in parallel, of which opening states can be controlled separately, an outlet of each of the one and more supercooling solenoid valves is connected to an inlet of a supercooling heat regenerator, an outlet of the supercooling heat regenerator is connected to an inlet of the expansion valve, and the controller controls, according to comparison results between indoor temperature and indoor humidity data received in real time and preset values, operating states of each of the one or more supercooling solenoid valves and the main solenoid valve, to achieve operations of separate refrigeration and refrigeration plus supercooling dehumidification, and adjusts amount of dehumidification by controlling opening number of the one or more supercooling solenoid valves.

2. The air conditioner according to claim 1, wherein the supercooling solenoid valve is connected to the condenser by means of a supercooling connecting pipe, the main solenoid valve is connected to the condenser by means of a main connecting pipe, and a pipe diameter of the supercooling connecting pipe is less than a pipe diameter of the main connecting pipe.

3. The air conditioner according to claim 1, wherein a calibre of each of the one or more supercooling solenoid valves is less than a calibre of the main solenoid valve.

4. A dehumidification method, using the air conditioner according to any one of claims 1-3, wherein in a refrigeration mode, a refrigerant passes, under action of a compressor, through a four-way valve into a condenser for heat exchange, a controller selects, according to comparison results between indoor temperature and indoor humidity data received in real time and preset values, a corresponding control program, to control operating states of a main solenoid valve and one or more supercooling solenoid valves, and opening number of the one or more supercooling solenoid valves, the refrigerant passes through the main solenoid valve or the supercooling solenoid valve, and the supercooling heat regenerator connected to the supercooling solenoid valve, then passes through an expansion valve and an evaporator to achieve refrigeration, and finally flows back to the compressor, to complete a refrigeration process or a refrigeration plus supercooling dehumidification process, and the controller controls the opening number of the one or more supercooling solenoid valves, to control amount of supercooling dehumidification.

5. The dehumidification method according to claim 4, wherein in a case that an indoor real-time temperature is in a range of t1 ≤Tim≤t2, and an indoor relative humidity RH is less than a*Tim+b, the opening number of the one or more supercooling solenoid valves is 1, wherein Tim is the indoor real-time temperature, t1 and t2 are temperature limit values preset by the controller, RH is the indoor relative humidity, and a and b are equation coefficients, empirical values and constants.

6. The dehumidification method according to claim 5, wherein in a case that the indoor real-time temperature is in the range of t1≤Tim≤t2, and the indoor relative humidity RH is less than c*Tim+d, the opening number of the one or more supercooling solenoid valves is 1, wherein Tim is the indoor real-time temperature, t1 and t2 are the temperature limit values preset by the controller, RH is the indoor relative humidity, c and d are equation coefficients, empirical values and constants, and c*Tim+d≤a*Tim+b.

7. The dehumidification method according to claim 6, wherein in a case that the indoor real-time temperature is in the range of t1≤Tim≤t2, and the indoor relative humidity is in a range of c*Tim+d≤RH≤a*Tim+b, the main solenoid valve is closed, and the opening number of the one or more supercooling solenoid valves is computed by means of an equation n=N*0.1*(RH-(c*Tim+d)-Toe/Tim-2)), wherein Tim is the indoor real-time temperature, t1 and t2 are the temperature limit values preset by the controller, RH is the indoor relative humidity, a, b, c and d are the equation coefficients, the empirical values, and the constants, n is the computed opening number of the one or more supercooling solenoid valves, and is an integer, computed data is rounded up to the integer, N is a total number of the supercooling solenoid valves, and Toe is a real-time condensation temperature.

8. The dehumidification method according to claim 4, wherein in a case that an indoor real-time temperature is in a range of t1≤Tim≤t2, and an indoor relative humidity RH is greater than or equal to a*Tim+b, the supercooling solenoid valves are all opened, and the main solenoid valve is closed.

9. The dehumidification method according to claim 4, wherein in a case that an indoor real-time temperature is not in a range of t1≤Tim≤t2, each of the one or more supercooling solenoid valves is closed, and the main solenoid valve is opened, wherein Tim is the indoor real-time temperature, and t1 and t2 are temperature limit values preset by the controller.

10. The dehumidification method according to any one of claims 4-9, wherein real-time signals of an indoor temperature and an indoor relative humidity are regularly received by the controller and are compared with preset values, and in a case that a next temperature signal value is received, and in a case of satisfying |Timᵢ-Tim₍ᵢ₊₁₎|>1°C, Tim and a relative humidity real-time value are compared with the preset values for determination anew, so as to determine opening states and the opening number of the one or more supercooling solenoid valves, and in a case of satisfying |Timᵢ-Tim₍ᵢ₊₁₎|≤1°C, last opening states are maintained, wherein Timᵢ is indoor temperature data at an i-th moment, and Tim ₍ᵢ₊₁₎ is indoor temperature data at an (i+1)-th moment.

11. An air conditioner, comprising a controller controlling operation of the air conditioner, and a compressor, a four-way valve, an evaporator, an expansion valve, solenoid valves and a condenser that are connected into a loop by means of pipelines, wherein the solenoid valves comprise a supercooling heat regenerator and a plurality of supercooling solenoid valves, an outlet of each of the plurality of the supercooling solenoid valves is connected to an inlet of the supercooling heat regenerator, an outlet of the supercooling heat regenerator is connected to an inlet of the expansion valve, and the controller controls, according to comparison results between indoor temperature and indoor humidity data received in real time and preset values, an operating state of each of the plurality of the supercooling solenoid valves, to adjust the amount of dehumidification.

12. The air conditioner according to claim 11, wherein the solenoid valves further comprise a main solenoid valve, an outlet of the main solenoid valve is in communication with the inlet of the expansion valve, and the controller controls operating states of the supercooling solenoid valves, the supercooling heat regenerator and the main solenoid valve, to achieve operations of separate refrigeration and refrigeration plus supercooling dehumidification.

13. The air conditioner according to claim 12, wherein each of the plurality of the supercooling solenoid valves is connected to the condenser by means of a supercooling connecting pipe, the main solenoid valve is connected to the condenser by means of a main connecting pipe, and a pipe diameter of the supercooling connecting pipe is less than a pipe diameter of the main connecting pipe.

14. The air conditioner according to claim 12, wherein a calibre of each of the plurality of the supercooling solenoid valves is less than a calibre of the main solenoid valve.

15. A dehumidification method, using the air conditioner according to any one of claims 4-7, wherein in a refrigeration mode, a refrigerant passes, under action of a compressor, through a four-way valve into a condenser for heat exchange, a controller selects, according to comparison results between indoor temperature and indoor humidity data received in real time and preset values, a corresponding control program, to control operating states of a supercooling heat regenerator and a plurality of supercooling solenoid valves, the refrigerant passes through the supercooling solenoid valve and the supercooling heat regenerator connected to the supercooling solenoid valve, then passes through an expansion valve and an evaporator to achieve refrigeration, and finally flows back to the compressor, and the controller controls the opening number of the plurality of the supercooling solenoid valves, to control amount of supercooling dehumidification.

16. The dehumidification method according to claim 15, wherein the solenoid valves further comprise a main solenoid valve, and the controller selects, according to the comparison results between the indoor temperature and the indoor humidity data received in real time and the preset values, a corresponding control program, to control an operating state of the main solenoid valve.

17. The dehumidification method according to claim 16, wherein in a case of satisfying t1≤Tim≤t2 and RH<a*Tim+b, the opening number of the plurality of the supercooling solenoid valves is 1, wherein Tim is an indoor temperature, t1 and t2 are temperature limit values preset by the controller, RH is indoor relative humidity, and a and b are equation coefficients, empirical values and constants.

18. The dehumidification method according to claim 17, wherein in a case of satisfying t1≤Tim≤t2 and RH<c*Tim+d, the opening number of the plurality of the supercooling solenoid valves is 1, wherein c and d are equation coefficients, empirical values and constants, and c*Tim+d≤a*Tim+b.

19. The dehumidification method according to claim 18, wherein in a case of satisfying t1≤Tim ≤t2 and c*Tim+d≤RH≤a*Tim+b, the main solenoid valve is closed, and the opening number of the plurality of the supercooling solenoids is computed by means of an equation
[n]=N*0.1*(RH-(c*Tim+d)-(Toe/Tim-2)), wherein [n] is the computed opening number of the supercooling solenoid valves, [n] is an integer, [] represents rounding up of computed data to the integer, N is a total number of the plurality of the supercooling solenoid valves, and Toe is a real-time condensation temperature.

20. The dehumidification method according to claim 15, wherein the solenoid valves further comprise a main solenoid valve, and in a case of satisfying t1≤Tim≤t2 and RH≥a*Tim+b, the plurality of the supercooling solenoid valves are all opened, and the main solenoid valve is closed.

21. The dehumidification method according to claim 15, wherein in a case that Tim does not satisfy t1≤Tim≤t2, each of the plurality of the supercooling solenoid valves is closed, and a main solenoid valve is opened, wherein Tim is a real-time temperature of an environment, and t1 and t2 are temperature limit values preset by the controller.

22. The dehumidification method according to any one of claims 15-21, wherein indoor temperature and indoor humidity data are regularly received by the controller, in a case of satisfying |Timᵢ-Tim ₍ᵢ₊₁₎ |>1°C, the indoor temperature and the indoor humidity data obtained in real time are compared with the preset values for determination anew, so as to determine opening states and the opening number of the plurality of the supercooling solenoid valves, and in a case of satisfying ITimi-Tim ₍ᵢ₊₁₎ |≤1°C, current opening states are maintained, wherein Timᵢ is indoor temperature data at an i-th moment, and Tim ₍ᵢ₊₁₎ is indoor temperature data at an (i+1)-th moment.
